# EUROPEAN PATENT APPLICATION

(11) **EP 3 196 779 A1**
(43) Date of publication of application: **26.07.2017**
(21) Application number: 15842033.1
(22) Date of filing: 07.07.2015
(51) Int. Cl.: G06F 17/30

(54) **INFORMATION PROCESSING DEVICE, INFORMATION PROCESSING METHOD AND COMPUTER PROGRAM**

(30) Priority: 17.09.2014 JP 2014188985
(71) Applicant: Sony Corporation, Tokyo 108-0075 (JP)
(72) Inventor: KURATA, Yoshinori, Tokyo 108-0075 (JP); ISHIHARA, Atsushi, Tokyo 108-0075 (JP); DOI, Shouichi, Tokyo 108-0075 (JP); MORITA, Masahiro, Tokyo 108-0075 (JP); TAKADA, Masayuki, Tokyo 108-0075 (JP); CHATANI, Masayuki, Tokyo 108-0075 (JP)
(74) Representative: MFG Patentanwälte Meyer-Wildhagen Meggle-Freund Gerhard PartG mbB
(86) International application number: PCT/JP2015/069555
(87) International publication number: WO 2016/042889

(57) **Abstract**

An information processing device is capable of providing a user with content to be recommended to the user in the most appropriate form. The information processing device includes a controller configured to determine a time slot suitable for outputting content by estimating behavior of a user and to extract an amount of content capable of outputting during the time slot based on information relating to preference of the user.

## Description

### Technical Field

The present disclosure relates to an information processing device, an information processing method, and a computer program.

### Background Art

Techniques for automatic extraction and recommendation of content, which is likely to be preferable for a user (information on still image, moving image, text, music, television program, and other text, audio, and image), to the user based on a user-set keyword are developed (e.g. see Patent Literature 1 or the like).

### Citation List

### Patent Literature

Patent Literature 1: JP 2010-033267A

### Disclosure of Invention

### Technical Problem

In a case where a user has time enough to view content with the eyes, the content can be provided for the user in the form of content itself. However, in a case where the user has little or even no time to view content with the eyes, like before going to work or school in the morning or during going to work or school, it is undesirable to provide the user with content in the form of content itself.

Therefore, the present disclosure provides a novel and improved information processing device, information processing method, and computer program, which is capable of providing a user with content to be recommended to the user in the most appropriate form.

### Solution to Problem

According to the present disclosure, there is provided an information processing device including: a controller configured to determine a time slot suitable for outputting content by estimating behavior of a user and to extract an amount of content capable of outputting during the time slot based on information relating to preference of the user.

According to the present disclosure, there is provided an information processing method including: determining a time slot suitable for outputting content by estimating behavior of a user; and extracting an amount of content capable of outputting during the time slot based on information relating to preference of the user.

There is provided a computer program for causing a computer to execute: determining a time slot suitable for outputting content by estimating behavior of a user; and extracting an amount of content capable of outputting during the time slot based on information relating to preference of the user.

### Advantageous Effects of Invention

According to the present disclosure as described above, it is possible to provide a novel and improved information processing device, information processing method, and computer program, which is capable of providing a user with content to be recommended to the user in the most appropriate form.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrated to describe an exemplary configuration of an information processing system 1 including an information processing device 100 according to an embodiment of the present disclosure.
[FIG. 2] FIG. 2 is a diagram illustrated to describe an exemplary functional configuration of the information processing device 100 according to an embodiment of the present disclosure.
[FIG. 3] FIG. 3 is a diagram illustrated to describe a content recommendation unit 110 included in the information processing device 100 according to an embodiment of the present disclosure.
[FIG. 4] FIG. 4 is a diagram illustrated to describe a behavior estimation unit 120 included in the information processing device 100 according to an embodiment of the present disclosure.
[FIG. 5] FIG. 5 is a diagram illustrated to describe a content output unit 130 included in the information processing device 100 according to an embodiment of the present disclosure.
[FIG. 6] FIG. 6 is a flowchart illustrating an exemplary operation of the information processing device 100 according to an embodiment of the present disclosure.
[FIG. 7] FIG. 7 is a diagram illustrated to describe an exemplary configuration of an information processing system 1 including the information processing device 100 according to an embodiment of the present disclosure.
[FIG. 8] FIG. 8 is a diagram illustrated to describe an exemplary hardware configuration.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

The description will be given in the following order.
1. Embodiment of present Disclosure
   1.1. Background
   1.2. Exemplary Functional Configuration
   1.3. Exemplary Operation
2. Exemplary Hardware Configuration
3. Conclusion

### <1. Embodiment of present Disclosure>

### [1.1. Background]

The background of an embodiment of the present disclosure is described prior to the detailed description of an embodiment of the present disclosure.

As described above, the technique for automatic extraction and recommendation of content, which is likely to be preferable for a user (information on still image, moving image, text, music, television program, user's personal RSS, weather forecast, future schedule, mail, SMS, and other text, audio, and image), to the user based on a user-set keyword is developed. With the use of such recommendation technique, if the user sets the name of a particular athlete as a keyword in one example, it is possible to provide video of a game in which the athlete participates to the user.

In this way, the content recommendation technique in the related art is mostly made for the purpose of recommending content to be viewed by the user with the eyes. In the case where the user has time enough to view the content with the eyes, it is only necessary to provide the content for the user in the form of content itself. However, in the case where the user has little or even no time to view content with the eyes, like before going to work or school in the morning or during going to work or school, it is undesirable to provide content for the user in the form of content itself.

In other words, if content is recommended to the user in a state in which the user has little time to view the content with the eyes, the user fails to digest the content just by viewing it with the eyes. Thus, it is considered that the important thing is to provide the technique for allowing content to be recommended to the user and digested by the user, even in the state in which the user has little time to view content with the eyes.

Thus, the disclosers of the present disclosure have made intensive studies to provide technology for allowing content to be recommended to the user and digested by the user even in the state in which the user has little time to view content with the eyes. Then, as it will be described below, the technology capable of estimating the user's behavior in recommending content to the user and providing the content by voice in the most appropriate form based on the estimated result is devised.

The background of an embodiment of the present disclosure has been described. Then, an information processing device according to an embodiment of the present disclosure is described in detail.

### [1.2. Exemplary Functional Configuration]

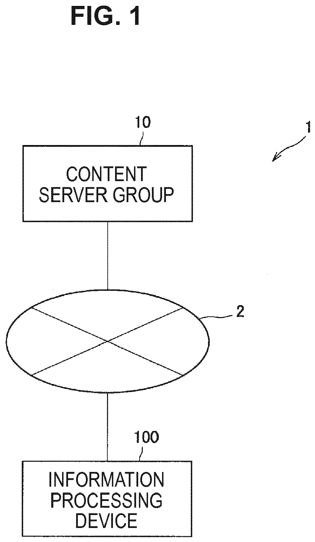

FIG. 1 is a diagram illustrated to describe an exemplary configuration of an information processing system 1 including an information processing device 100 according to an embodiment of the present disclosure. FIG. 1 illustrates an exemplary configuration of the information processing device 100 including the information processing device 100 that executes a process of determining content to be recommended to the user from among content items held in a content server group 10 and allowing the user to digest the content.

The content server group 10 is configured to include one or more servers, and holds content that is composed of information on still image, moving image, text, music, television program, and other text, audio, and image. The information processing device 100 acquires content from the content server group 10 over a network 2, and executes a process of displaying the acquired content or outputting it by voice. The acquisition of the content held in the content server group 10 by the information processing device 100 may be performed in response to an operation by the user of the information processing device 100, or may be performed at any timing by the information processing device 100. The information processing device 100 may be a device intended to be carried by the user, such as smartphone and tablet portable terminal.

In the present embodiment, the information processing device 100 analyzes preference of the user of the information processing device 100 and extracts content to be recommended to the user from among content items held in the content server group 10 based on the analyzed result. Furthermore, in the present embodiment, the information processing device 100 estimates behavior of the user of the information processing device 100 and regulates quantities of content to be provided for the user based on the estimated result.

The information processing device 100 estimates the user's behavior and regulates the amount of content to be provided for the user based on the estimated result as described above, and thus it is possible to provide the user with content to be recommended to the user in the most appropriate form. Then, the information processing device 100 regulates the amount of content to be provided for the user and outputs the content by voice. Thus, it is possible to allow the user to digest the content to be recommended to the user, in one example, even in the state in which the user has little time to view content with the eyes.

The exemplary functional configuration of the information processing system 1 including the information processing device 100 according to an embodiment of the present disclosure has been described with reference to FIG. 1. Then, an exemplary functional configuration of the information processing device 100 according to an embodiment of the present disclosure is described.

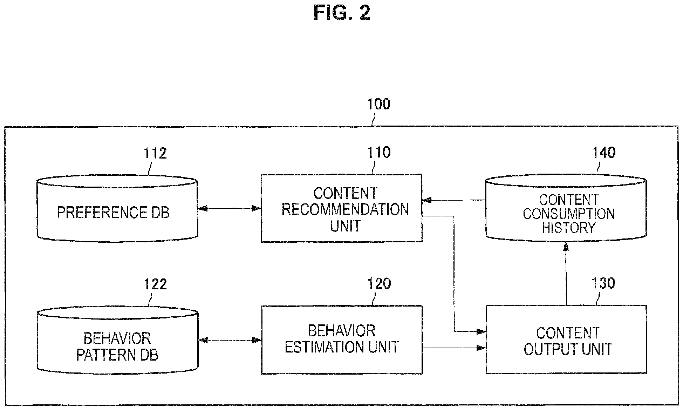

FIG. 2 is a diagram illustrated to describe an exemplary functional configuration of the information processing device 100 according to an embodiment of the present disclosure. An exemplary functional configuration of the information processing device 100 according to an embodiment of the present disclosure is described with reference to FIG. 2.

As illustrated in FIG. 2, the information processing device 100 according to an embodiment of the present disclosure is configured to include a content recommendation unit 110, a behavior estimation unit 120, and a content output unit 130.

The content recommendation unit 110 executes a process of determining content to be recommended to the user of the information processing device 100 from among content items held in the content server group 10. The content recommendation unit 110, when executing the process of determining content to be recommended to the user of the information processing device 100, in one example, uses information relating to preference of the user of the information processing device 100 or information relating to content browsed or viewed by the user of the information processing device 100. The information relating to preference of the user of the information processing device 100 may be stored in a preference database (DB) 112, in one example. Furthermore, the information relating to content browsed or viewed by the user of the information processing device 100 may be stored in a content consumption history 140, in one example.

The content recommendation unit 110, when determining content to be recommended to the user of the information processing device 100, creates a list for the determined content. Then, the content recommendation unit 110 delivers the created list to the content output unit 130. Moreover, the content recommendation unit 110 sets a cluster to which the user belongs from a history of access to the content by the user of the information processing device 100 or a search condition that is set by the user and thus may create a list of content to be recommended for each cluster.

The behavior estimation unit 120 executes a process of estimating behavior of the user of the information processing device 100. In executing the process of estimating behavior of the user of the information processing device 100, the behavior estimation unit 120 may use information on a history of operating the information processing device 100 or may use data sensed by a sensor that is incorporated in the information processing device 100 or included in a device attached to the user's body in one example. Furthermore, the behavior estimation unit 120 may use information relating to a schedule registered by the user of the information processing device 100 or may use information on a mail received by the user of the information processing device 100 in one example, in executing the process of estimating behavior of the user of the information processing device 100.

The behavior estimation unit 120, when estimating the behavior of the user of the information processing device 100, delivers the estimated result to the content output unit 130. Moreover, the behavior estimation unit 120 may execute the process of estimating the behavior of the user of the information processing device 100 in real time or at predetermined intervals.

Furthermore, the behavior estimation unit 120, when it is found that there is a fixed pattern of the behavior of the user of the information processing device 100, may store information on the behavior pattern in a behavior pattern database 122. Then, the behavior estimation unit 120 may estimate the behavior of the user of the information processing device 100 by referring to the information on the behavior of the user of the information processing device 100, which is stored in the behavior pattern database 122. In one example, if the operation history of the information processing device 100 or the behavior estimated using the data sensed by a sensor is different from the behavior pattern stored in the behavior pattern database 122, the behavior estimation unit 120 can determine that the user of the information processing device 100 performs behavior different from a usual behavior pattern.

The content output unit 130 acquires and outputs the content held in the content server group 10 in a form suitable for the behavior being performed by the user using the list created by the content recommendation unit 110 and the user's behavior estimated by the behavior estimation unit 120. In the present embodiment, the content output unit 130 adjusts an amount of content to be outputted that is held in the content server group 10 based on the list and the user's behavior. Then, the content output unit 130 has a function of converting the content whose output amount is adjusted into voice and outputting it to allow the user to understand it without viewing the screen.

If the user consumes the content outputted from the content output unit 130, that is, when the user has completed viewing or listening to the content, the content output unit 130 stores a history in which the user consumes the content in the content consumption history 140. The content consumption history 140 may be used in performing the process of recommending content by the content recommendation unit 110.

Moreover, the content output unit 130 may output content in a form of content itself, i.e., in a form including text or image rather than converts the content into voice and outputs it. If the user of the information processing device 100 is able to afford to view content with the eyes, the content output unit 130 may output content in the form of content itself.

The information processing device 100 according to an embodiment of the present disclosure has the configuration as illustrated in FIG. 2, and thus it is possible to estimate the user's behavior and regulate the amount of content to be provided for the user based on the estimated result. The information processing device 100 according to an embodiment of the present disclosure illustrated in FIG. 2 can regulate the amount of content to be provided for the user, thereby providing the user with content to be recommended to the user in the most appropriate form.

Then, the information processing device 100 according to an embodiment of the present disclosure illustrated in FIG. 2 regulates the amount of content to be provided for the user and outputs the content by voice. This allows the user to digest content recommended to the user, in one example, even in a case where the user has little time to view the content with the eyes.

In one example, the information processing device 100 can extract items having a high degree of importance from among weather forecast, today's schedule, train driving conditions, number of new mails, and newly arrived mail as the content to be recommended to the user, and then execute a process of sequential screen-reading of them, in consideration of the time it takes for the user to leave home after waking up in the morning. Furthermore, in one example, the information processing device 100 can extracts an article that is the topic of conversation among many users through news published by a newspaper or SNS as the content to be recommended to the user and perform a process of sequential screen-reading of it, in consideration of a time slot in which the user is on the train.

The exemplary functional configuration of the information processing device 100 according to an embodiment of the present disclosure has been described with reference to FIG. 2. Then, blocks of the information processing device 100 illustrated in FIG. 2 are described in detail.

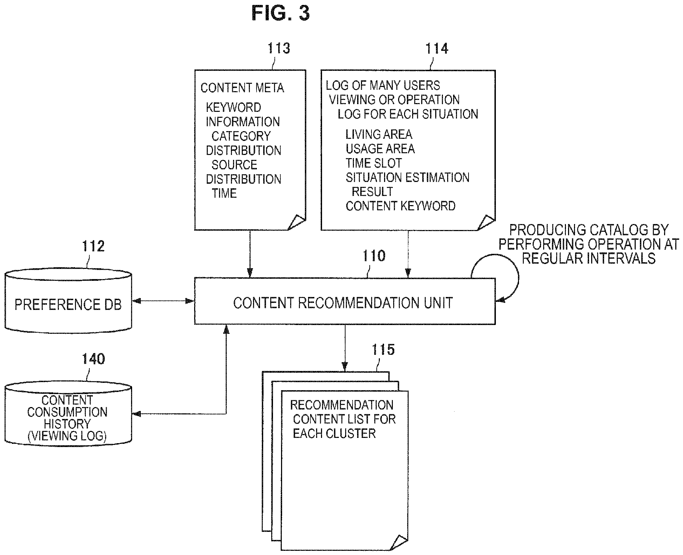

FIG. 3 is a diagram illustrated to describe the content recommendation unit 110 included in the information processing device 100 according to an embodiment of the present disclosure. The content recommendation unit 110 included in the information processing device 100 according to an embodiment of the present disclosure is described in detail with reference to FIG. 3.

As described above, the content recommendation unit 110 executes a process of determining content to be recommended to the user of the information processing device 100 from among content items held in content server group 10. The content recommendation unit 110 can use various types of information in determining content to be recommended to the user of the information processing device 100.

FIG. 3 illustrates meta-information of content held in the content server group 10 and log information of the user of the information processing device 100 or a plurality of users other than the user of the information processing device 100, as an example of information used in determining content to be recommended to the user of the information processing device 100 by the content recommendation unit 110.

Examples of the meta-information of content held in the content server group 10 may include information on keyword of content, content information category, information distribution source, information distribution time. The keyword of content may be information relating to the content that can be set in the content distribution source, in one example, but is not limited to particular contents. Furthermore, in a case where the content is a news article, the content information category is information relating to a genre of the news that can be set in the content distribution source, in one example.

Examples of the log information of a plurality of users may include a viewing log or operation log of content in all situations for each user, a user living area, a usage area, a content viewing time slot, a result of content situation estimation, and a content's keyword.

Furthermore, FIG. 3 illustrates information relating to the preference of the user of the information processing device 100, which is stored in the preference database 112 as an example of information used in determining content to be recommended to the user of the information processing device 100 by the content recommendation unit 110.

Examples of the information relating to the preference of the user of the information processing device 100, which is stored in the preference database 112 include information obtained by setting a cluster to which the user belongs from a history of access to content or a search condition that is set by the user and by applying a filter configured to determine whether the content recommended by the content recommendation unit 110 has been read by the user using a history of access to immediate content by the user to the content recommended by the content recommendation unit 110.

The content recommendation unit 110 determines content to be recommended to the user of the information processing device 100 from among content items held in the content server group 10 using the meta-information of content, the log information of a plurality of users, and the information stored in the preference database 112 as described above. Then, the content recommendation unit 110 creates a recommendation content list 115 that is a list of content to be recommended to the user of the information processing device 100.

The cluster of users may vary depending on a time slot or situations. In one example, there is a case where some users prefer political or economic news in a commuting time slot in the morning but prefer sport news in a homecoming time slot at night. Thus, the user may shift the cluster depending on each of a plurality of situations. Thus, the content recommendation unit 110 creates the recommendation content list 115 for each cluster to which the user belongs.

The content recommendation unit 110 may execute an operation process of creating the recommendation content list 115 at regular intervals. The content to be recommended to the user of the information processing device 100 may vary with time, and thus the content recommendation unit 110 may execute the operation process of creating the recommendation content list 115 at regular intervals and produce a catalog from the created recommendation content list 115.

The content recommendation unit 110 included in the information processing device 100 according to an embodiment of the present disclosure has been described with reference to FIG. 3.

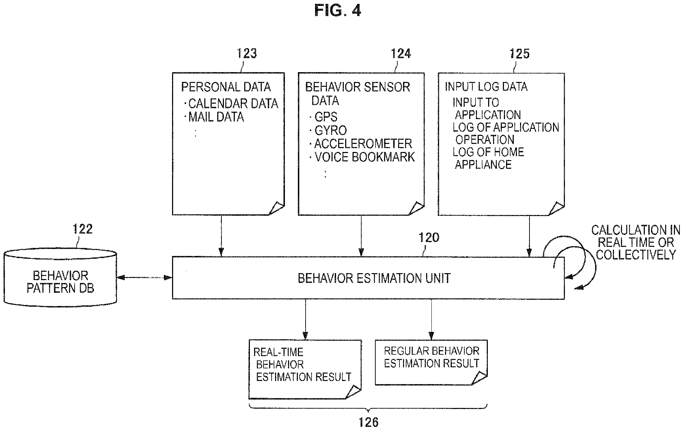

FIG. 4 is a diagram illustrated to describe the behavior estimation unit 120 included in the information processing device 100 according to an embodiment of the present disclosure. The behavior estimation unit 120 included in the information processing device 100 according to an embodiment of the present disclosure is described in detail with reference to FIG. 4.

As described above, the behavior estimation unit 120 executes a process of estimating the behavior of the user of the information processing device 100. The behavior estimation unit 120 can estimate the behavior of the user of the information processing device 100 by using data that is not dedicated to a behavior history, such as an operation history of other applications or devices, or using data from an application or device intended for acquiring a behavior history. Examples of the device intended for acquiring a behavior history may include a wristband device worn by the user on the arm and a head-mounted display worn by the user on the head.

In the present embodiment, the behavior estimation unit 120 uses personal data 123 including calendar data and mail data, behavior sensor data 124 acquired by a sensor, and input log data 125 that is an operation log for an application or device, in executing the process of estimating the behavior of the user of the information processing device 100. Examples of the device as an object of the input log data 125 are not limited to the information processing device 100, but include a device being used usually by the user of the information processing device 100, for example, a television as home appliances, a personal computer, and a game console.

Detailed examples of the behavior estimation process performed by the behavior estimation unit 120 are described. The description will be given by taking a case of estimating a time slot in which the user of the information processing device 100 is riding on a train.

In the case of estimating a time slot in which the user of the information processing device 100 is riding on a train, the behavior estimation unit 120 aggregates the operation history of the information processing device 100 for a predetermined time period (e.g. one to two weeks) and may estimate that a time slot in which operations are performed in the morning and frequently is the time slot in which the user of the information processing device 100 is riding on the train.

Furthermore, in a case where data sensed by an accelerometer can be used, the behavior estimation unit 120 may estimate that a time slot in which operations are performed in the morning and the acceleration and deceleration are repeated is the time slot in which the user of the information processing device 100 is riding on the train.

Furthermore, in a case where data sensed by a sensor for acquiring a current position can be used, the behavior estimation unit 120 may estimate the time slot in which the user of the information processing device 100 is riding on the train from a change in the current position and travel time. In this event, in a case where timetable data of the train can be further acquired, the behavior estimation unit 120 may estimate the time slot in which the user of the information processing device 100 is riding on the train using the timetable data of the train.

It is certain that the above case is only an example of a process of estimating a time slot in which the user is riding on the train.

It is certain that the behavior estimation unit 120 can estimate various types of behavior of the user in addition to the process of estimating a time slot in which the user of the information processing device 100 is riding on the train.

The behavior estimation unit 120 can estimate situations of the user of the information processing device 100 using the personal data 123, the behavior sensor data 124, and the input log data 125 as described above. More specifically, the behavior estimation unit 120 can recognize a combination of behavior situations of the user (high context), location of the user, and behavior modes made by the user, as the situation of the user of the information processing device 100.

An example of the combination of the user's behavior situations (high context), user's location, and behavior modes made by the user is illustrated below.

| Behavior Situation | Location | Possible Behavior Modes |
|---|---|---|
| Transfer | Train, Bus, etc. | • Standing, Sitting |
| | | • Crowded |
| | | • Hands are full |
| Relaxation | Home, Bedroom | • Watching TV, Listening to music, Reading a book |
| | | • Chatting with friend |
| Waking-up Preparation | Home, Bedroom | • Hands are full |
| | | • Unable to take eyes off |

Furthermore, the behavior estimation unit 120 can predict the future behavior of the user of the information processing device 100 using the personal data 123, the behavior sensor data 124, and the input log data 125 as described above. More specifically, the behavior estimation unit 120 predicts a situation that is more likely to be changed in the daily behavior. In one example, in a case where it is estimated that the user of the information processing device 100 is riding on a train in the morning time slot, the behavior estimation unit 120 can predict that the user will go to work or school.

The behavior estimation unit 120 is also capable of predicting the future behavior of the user of the information processing device 100 by accumulating behavior patterns of the user of the information processing device 100 in the behavior pattern database 122 and by referring to the accumulated data. In one example, there is a case where a behavior pattern in which the user is riding on a train at 8 a.m. every weekday is stored in the behavior pattern database 122. In this case, if the user is on an airplane rather than a train in that time slot, the behavior estimation unit 120 can predict that the user of the information processing device 100 is performing unusual behavior, that is, performing unordinary behavior, for example, going on a business trip or traveling.

The behavior estimation unit 120 outputs a behavior estimation result 126 as a result of estimating the behavior of the user of the information processing device 100. The behavior estimation unit 120 may process the behavior of the user of the information processing device 100 in real time or may process it collectively using data accumulated during a predetermined time of period. Then, the behavior estimation unit 120 may output, as the behavior estimation result, two types of behavior estimation results. One is a behavior estimation result obtained in real time and the other is a behavior estimation result processed at regular intervals.

The behavior estimation unit 120 outputs the behavior estimation result 126 to the content output unit 130. The content output unit 130 adjusts content to be recommended to the user of the information processing device 100 and the amount of recommendation content by referring to the behavior estimation result 126.

The behavior estimation unit 120 included in the information processing device 100 according to an embodiment of the present disclosure has been described with reference to FIG. 4.

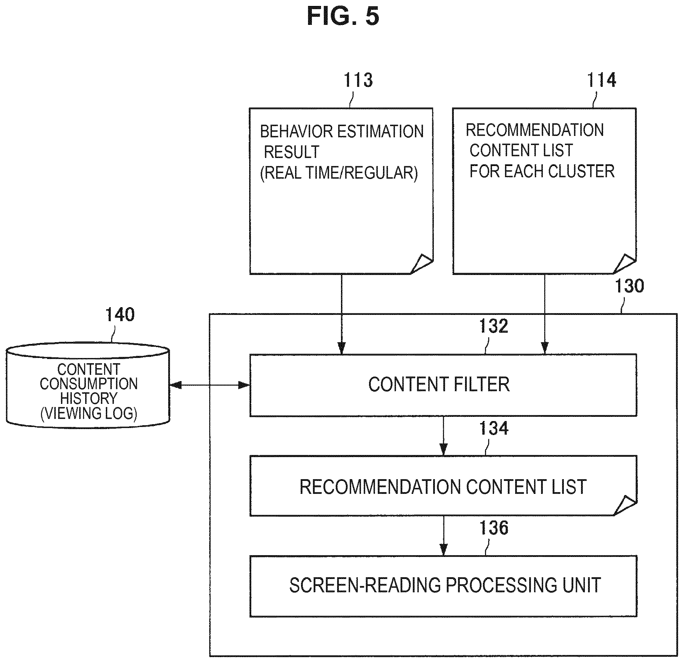

FIG. 5 is a diagram illustrated to describe the content output unit 130 included in the information processing device 100 according to an embodiment of the present disclosure. The content output unit 130 included in the information processing device 100 according to an embodiment of the present disclosure is described in detail with reference to FIG. 5.

The content output unit 130 adjusts content to be recommended to the user of the information processing device 100 and the amount of recommendation content using the recommendation content list 115 created by the content recommendation unit 110 and the behavior estimation result 126 created by the behavior estimation unit 120, and outputs the content. Furthermore, the content output unit 130, when outputting the content, has a function of outputting the content by voice as long as the content can be converted into voice.

As illustrated in FIG. 5, the content output unit 130 is configured to include a content filter 132 and a screen-reading processing unit 136.

The content filter 132 performs filtering of content listed in the recommendation content list 115 using the recommendation content list 115 created by the content recommendation unit 110 and the behavior estimation result 126 created by the behavior estimation unit 120.

If reading through screen-reading for each of content items listed in the recommendation content list 115 is completed, there is a case where the user fails to consume the content. Furthermore, if reading through screen-reading for only a portion rather than for all the content items is performed, there is a case where the user fails to understand the contents thereof depending on content.

Thus, more specifically, the content filter 132 adjusts the number of content items listed in the recommendation content list 115 and adjusts the amount of content in reading through screen-reading by the screen-reading processing unit 136 using the behavior estimation result 126. The content filter 132 creates the recommendation content list 134 obtained through the filtering and provides the recommendation content list 134 for the screen-reading processing unit 136.

In one example, if it is found that the user of the information processing device 100 can listen to the content that is read through screen-reading for 30 minutes from the behavior estimation result 126, the content filter 132 performs filtering of content so that the amount of content is limited to an amount that can read it through screen-reading by the screen-reading processing unit 136 in 30 minutes.

In this way, the filtering of content performed by the content filter 132 makes it possible to allow the user of the information processing device 100 to consume efficiently the content to be recommended to the user.

The content filter 132 may also perform context-based collaborative filtering based on the history of many users. In one example, for a user placed in a certain situation, the content filter 132 may extract information accessed by a user having similar preference.

The content distribution side may also transmit information having a limited user's behavior situation or preference. In one example, if the behavior estimation unit 120 estimates that the user of the information processing device 100 uses frequently a particular route or station, the content filter 132 may extract information relating to a new store of the route or station or the latest event information thereof based on the estimated result.

The content filter 132 may use the content consumption history 140 in creating the recommendation content list 134. In other words, the content filter 132 may create the recommendation content list 134 so that the content of a genre satisfied and consumed by the user of the information processing device 100 is intensively recommended from the recommendation content list 115.

The content filter 132, when creating the recommendation content list 134, may create the recommendation content list 134, in which the content items to be recommended to the user in the next morning time slot are listed in one example, previously at the night before the day. Then, if the user is estimated to perform behavior that is the same as usual in the next morning time slot based on a result obtained by estimating the behavior in the behavior estimation unit 120, the content output unit 130 may output the content based on the previously created recommendation content list 134. On the other hand, if the user is estimated to perform behavior that is different from usual in the next morning time slot based on a result obtained by estimating the behavior in the behavior estimation unit 120, the content output unit 130 may re-create the recommendation content list 134 and then output content based on the re-created recommendation content list 134.

The screen-reading processing unit 136 executes a screen-reading process of content based on the recommendation content list 134 created by the content filter 132. Thus, the screen-reading processing unit 136 has a text-to-speech function of performing screen-reading of content by voice synthesis.

The screen-reading processing unit 136 executes the screen-reading process of content at the timing when the user of the information processing device 100 is willing for the content to be read out through screen-reading by default. The timing when it is willing for the content to be read out through screen-reading may vary depending on whether the contents read out through screen-reading is heard by only the user of the information processing device 100 or by other people.

The timing when it is willing for the content to be read out through screen-reading may be immediately after the user of the information processing device 100 wakes up and wears a headset on the head, a point of time when the user is determined to be riding on a car or train by the behavior estimation unit 120, or a point of time when the user is determined to be left the office by the behavior estimation unit 120. Furthermore, the timing when it is willing for the content to be read out through screen-reading may be a point of time when the user is determined to be making a slight movement such as walking by the behavior estimation unit 120.

On the other hand, examples of the timing when it is unwilling for the content to be read out through screen-reading may include a case of being heard by other people, and in one example, a point of time when a family member is determined to be present in his own house by the behavior estimation unit 120 can be considered. Even a case where the user is present in his own house, a timing when the alarm sounds or a time period while the user is making up may be the timing at which it is willing for the content to be read out through screen-reading. At such timing, the content may be read out through screen-reading by the screen-reading processing unit 136.

Moreover, in a case where it is obvious that the user is in an environment where nobody other than himself is around himself such as living alone, even a case where the user is present in his own house, the content may be read out through screen-reading by the screen-reading processing unit 136 at the timing when it is willing for the content to be read out through screen-reading.

The screen-reading processing unit 136 may adjust a reading-out speed of content through screen-reading based on the setting by the user. Furthermore, the screen-reading processing unit 136 may adjust a reading-out speed of content through screen-reading in consideration of the amount of content to be recommended and a time when content can be read out through screen-reading. Furthermore, in a case where the reading-out speed of content through screen-reading is adjusted based on the setting by the user, the content filter 132 may adjust the amount of content depending on the reading-out speed of content through screen-reading.

In other words, as the user increases the reading-out speed of content through screen-reading, the amount of content that can be read out through screen-reading increases even at the same time. Thus, if the reading-out speed of content through screen-reading is doubled in one example, the content filter 132 may double the amount of content to be outputted as a result of filtering.

In a case where the reading-out of content is stopped halfway through the screen-reading by the user, the screen-reading processing unit 136 may change its behavior when the user resumes the reading-out speed of content through screen-reading based on the setting by the user.

In one example, the screen-reading processing unit 136 may simply resume from the stopped position. Then, the re-operation of the subsequent content to be read out through screen-reading by the screen-reading processing unit 136 may be performed by the content recommendation unit 110 for each situation in which the screen-reading is resumed.

Furthermore, in one example, the screen-reading processing unit 136 may save content, which is listed in the recommendation content list 134 and have not completed the screen-reading, and may read out the uncompleted content preferentially when user resumes the reading-out of content through screen-reading.

Furthermore, in one example, the screen-reading processing unit 136 may read out the latest content recommended by the content recommendation unit 110 through screen-reading at all time, while managing whether the content listed in the recommendation content list 134 is read or not.

It is certain that the behavior of the screen-reading processing unit 136 when the screen-reading of content is resumed by the user is not limited to the above-mentioned case.

The screen-reading processing unit 136 may skip the screen-reading of content in which the user is incapable of understanding without viewing an image from among content items listed in the recommendation content list 134. In this case, the screen-reading processing unit 136 may determine whether the screen-reading of content is to be skipped or not based on information including a screen-readable flag set on the distribution side, which is a flag on whether there is an image or whether the screen-reading of content is possible. Furthermore, in this event, in a case where a summary or the like of content is an object that is subject to the screen-reading and the reading of the summary or the like is known, the screen-reading processing unit 136 may decide to skip the relevant image portion.

It is also considered a case where the screen-readable flag is not set in the content by a content distribution source. In this case, the screen-reading processing unit 136 may upload information on determination of whether the screen-reading is necessary by the user to the content server group 10 so that the information relating to the screen-reading of the content is shared with other users.

As described above, the screen-reading processing unit 136 can upload information on determination of whether the screen-reading is necessary to the content server group 10, and thus, when another user processes the same content, it is possible for the information processing device 100 of the other user to determine that the screen-reading of the content is unnecessary.

The screen-reading processing unit 136 may skip the screen-reading of content based on an operation on a device for performing the screen-reading of content. In one example, in a case where the device for performing the screen-reading of content is a headset, the screen-reading processing unit 136 may skip the screen-reading of content based on a skip instruction that is given by a voice operation or a button operation on the headset.

Furthermore, the screen-reading processing unit 136 may recognize the user's speech contents picked up by a microphone of the headset while the content is played back in the headset. In this case, if the speech contents are the skip instruction, the screen-reading processing unit 136 may skip the screen-reading of content based on the skip instruction. In this case, the user's speech contents is necessary to be recognized, and thus the screen-reading processing unit 136 may recognize the user's speech contents by temporarily stopping the screen-reading process of content or by minimizing the volume in performing the screen-reading.

The user of the information processing device 100, when performing an operation on content that is being played back in the headset, speaks a predetermined keyword (magic keyword) that is set previously. If the screen-reading processing unit 136 recognizes that the keyword is spoken, the screen-reading processing unit 136 temporarily stops playing back the content and waits for the speech from the user. Then, if the user speaks a keyword for an operation on the content, the screen-reading processing unit 136 executes a process on the content depending on the speech contents.

In one example, if the user speaks a keyword relating to the playing back of content such as "Play again from the beginning", the screen-reading processing unit 136 may read out the content being played back again from the beginning through screen-reading. Furthermore, in one example, if the user speaks a keyword relating to the genre designation such as "Play sport news", the screen-reading processing unit 136 may switch the genre to one designated by the user and perform the screen-reading of content of the genre.

The screen-reading processing unit 136 may control the screen-reading of content in accordance with a schedule registered by the user of the information processing device 100 using information relating to the schedule. In one example, if the time for the user to leave the house to go to work is getting close, the screen-reading processing unit 136 may switch the content that is read out through screen-reading to the train's driving conditions, in one example. In one example, in a case where a train is stopped due an injury accident or the like or a timetable is disrupted, the screen-reading processing unit 136 may output a voice to urge the user to depart earlier than usual as well as perform the screen-reading of the train's driving condition.

Moreover, the screen-reading processing unit 136 may change contents of the content to be read out through screen-reading depending on the condition of a device that is provided in the information processing device 100 or is connected to the information processing device 100. In one example, the screen-reading processing unit 136 may change contents of the content to be read out through screen-reading depending on whether there is a display or whether the display is turned off even when the display is provided.

Furthermore, the screen-reading processing unit 136 may change contents of the content to be read out through screen-reading depending on whether the user's face is visible from the information processing device 100. In one example, the screen-reading processing unit 136 may output a voice for inquiry such as "Can you view the screen", and may change contents of the content to be read out through screen-reading based on whether there is a response to the inquiry.

Moreover, the information processing device 100 according to an embodiment of the present disclosure may display a character image on a screen and perform display control such that a character image speaks contents of the content in performing the screen-reading by the screen-reading processing unit 136.

The content output unit 130 included in the information processing device 100 according to an embodiment of the present disclosure has been described with reference to FIG. 5. Then, an exemplary operation of the information processing device 100 according to an embodiment of the present disclosure will be described.

### [1.3. Exemplary Operation]

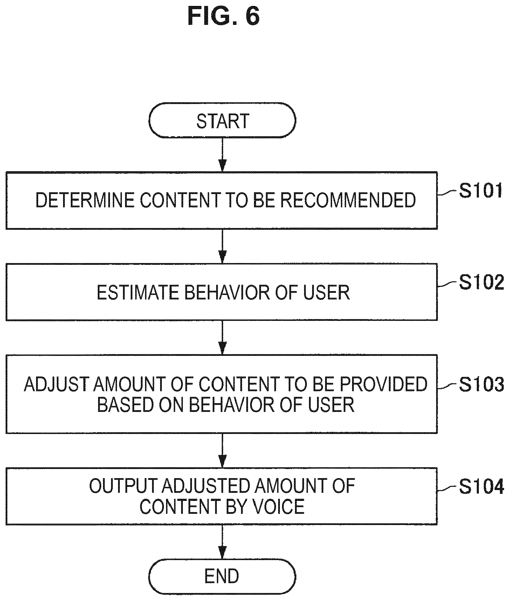

FIG. 6 is a flowchart illustrating an exemplary operation of the information processing device 100 according to an embodiment of the present disclosure. FIG. 6 illustrates an exemplary operation of the information processing device 100 in determining content to be recommended to the user of the information processing device 100 and in outputting the content to be recommended by voice. An exemplary operation of the information processing device 100 according to an embodiment of the present disclosure is described with reference to FIG. 6.

The information processing device 100 determines content to be recommended to the user of the information processing device 100 from among content items held in the content server group 10 (step S101). The process of determining content in step S101 is executed, in one example, by the content recommendation unit 110. Moreover, the process of determining content in step S101 is similar to that mentioned in the description of the content recommendation unit 110.

If the content to be recommended to the user of the information processing device 100 is determined in step S101, then the information processing device 100 estimates the behavior of the user of the information processing device 100 (step S102). The process of estimating the user's behavior in step S102 is executed, in one example, by the behavior estimation unit 120. Moreover, the process of estimating the behavior in step S102 is similar to that mentioned in the description of the behavior estimation unit 120.

Moreover, the processes in steps S101 and S102 may be performed in reverse order. On the other hand, the processes in steps S101 and S102 may be performed in parallel.

If the behavior of the user of the information processing device 100 is estimated in step S102, then the information processing device 100 adjusts the amount of content to be provided for the user of the information processing device 100 based on the behavior of the user of the information processing device 100, which is estimated in step S102 (step S103). The process of adjustment in step S103 is executed, in one example, by the content filter 132. Moreover, the process of adjustment in step S103 is similar to that mentioned in the description of the content output unit 130.

If the amount of content to be provided for the user of the information processing device 100 is adjusted in step S103, then the information processing device 100 outputs the adjusted amount of content by voice (step S104). The output process in step S104 is executed, in one example, by the screen-reading processing unit 136.

The information processing device 100 estimates the user's behavior by executing a series of operations as illustrated in FIG. 6 and adjusts the amount of content to be provided for the user based on the estimated result. Accordingly, it is possible to provide the user with content to be recommended to the user in the most appropriate form. The information processing device 100 adjusts the amount of content to be provided for the user and outputs the content by voice by executing a series of operations as illustrated in FIG. 6. Accordingly, it is possible to allow the user to digest the content to be recommended to the user, in one example, even a case where the user has little time to view the content with the eyes.

The exemplary operation of the information processing device 100 according to an embodiment of the present disclosure has been described with reference to FIG. 6.

Although, in the present embodiment described above, there is shown the example in which the processes of determining the content to be recommended to the user and outputting the content to be recommended to the user by voice are all executed by the information processing device 100, the present disclosure is not limited thereto. The process of determining the content to be recommended to the user and the process of outputting the content by voice may be performed, in one example, by separate devices.

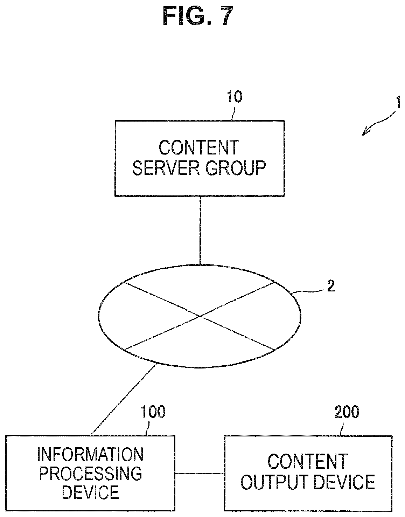

FIG. 7 is a diagram illustrated to describe an exemplary configuration of an information processing system 1 including the information processing device 100 according to an embodiment of the present disclosure. The information processing system 1 illustrated in FIG. 7 has a configuration in which a content output device 200 is included in the information processing system 1 illustrated in FIG. 1.

The content output device 200 has a function of determining content to be recommended to the user, and the content output device 200 has also functions of acquiring a recommendation content list from the information processing device 100 that executes the process of adjusting the amount of content and outputting the content by voice based on the recommendation content list. Thus, the content output device 200 may be provided with the screen-reading processing unit 136, in one example, in the content output unit 130 illustrated in FIG. 5.

In this way, even a case where the process of determining the content to be recommended to the user and the process of outputting the content by voice are performed by separate devices, it is possible to determine the content to be recommended to the user, to perform the process of adjusting the amount of content, and to provide the user with the content by voice.

### <2. Exemplary Hardware Configuration>

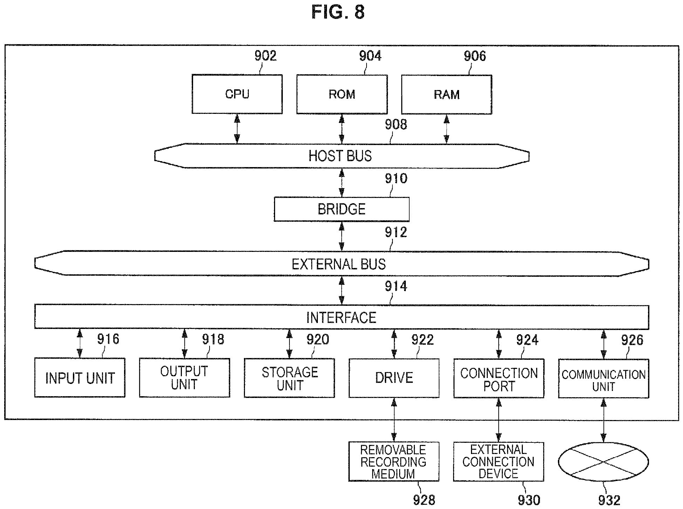

The hardware configuration of the information processing device 100 according to an embodiment of the present disclosure is described with reference to FIG. 8. FIG. 8 is a block diagram illustrating an exemplary hardware configuration of the information processing device 100 according to an embodiment of the present disclosure. Each of the algorithms described above can be implemented by using, in one example, the hardware configuration of the information processing device shown in FIG. 8. That is, the processing of each of the algorithms can be implemented by controlling the hardware shown in FIG. 8 using a computer program. Moreover, this hardware has an optional configuration, and examples thereof include a personal computer, a portable information terminal such as mobile phone, PHS, and PDA, a game console, a contact or contactless IC chip, a contact or contactless IC card, or various types of home information appliances. PHS is an abbreviation for Personal Handy-phone System, and PDA is an abbreviation for Personal Digital Assistant.

As illustrated in FIG. 8, this hardware mainly includes a CPU 902, a ROM 904, a RAM 906, a host bus 908, and a bridge 910. This hardware further includes an external bus 912, an interface 914, an input unit 916, an output unit 918, a storage unit 920, a drive 922, a connection port 924, and a communication unit 926. CPU is an abbreviation for Central Processing Unit, ROM is an abbreviation for Read Only Memory, and RAM is an abbreviation for Random Access Memory.

The CPU 902 functions as an operation processing unit or a control unit, and controls the entire operation or a portion of the operation of each component based on various programs recorded on the ROM 904, the RAM 906, the storage unit 920, or a removable recording medium 928. The ROM 904 is a device for storing, in one example, a program to be read by the CPU 902 or data used for an operation. The RAM 906 is memory that temporarily or permanently stores a program to be read by the CPU 902 or various parameters appropriately changed in execution of the program.

These components are connected to each other, in one example, over the host bus 908 allowing high-speed data transmission. On the other hand, the host bus 908 is connected to the external bus 912 having relatively low data transmission speed via the bridge 910, in one example. Furthermore, examples of the input unit 916 include a mouse, a keyboard, a touch panel, a button, a switch, or a lever. Furthermore, an example of the input unit 916 may include a remote controller allowing transmission of a control signal using an infrared ray or other radio waves.

The output unit 918 is a device allowing visual or auditory notification of acquired information to a user, and examples thereof include a display device such as CRT, LCD, PDP, and ELD, an audio output device such as speakers or headphones, a printer, a mobile phone, and a facsimile. CRT is an abbreviation for Cathode Ray Tube, LCD is an abbreviation for Liquid Crystal Display, PDP is an abbreviation for Plasma Display Panel, and ELD is an abbreviation for Electro-Luminescence Display.

The storage unit 920 is a device used to store various data. Examples of the storage unit 920 include a magnetic storage device such as hard disk drive (HDD), a semiconductor storage device, an optical storage device, and a magneto-optical storage device. HDD is an abbreviation for Hard Disk Drive.

The drive 922 is a device that reads information recorded on the removable recording medium 928 such as a magnetic disk, an optical disc, a magneto-optical disc, and a semiconductor memory, or writes information in the removable recording medium 928, in one example. Examples of the removable recording medium 928 include a DVD medium, a Blu-ray medium, an HD-DVD medium, and various types of semiconductor storage media. Of course, the removable recording medium 928 may be, for example, an electronic device or an IC card on which a contactless IC chip is mounted. IC is an abbreviation for Integrated Circuit.

Examples of the connection port 924 include a USB port, an IEEE1394 port, a SCSI, an RS-232C port, and a port for connecting an externally connected device 930 such as an optical audio terminal. Examples of the externally connected device 930 include a printer, a mobile music player, a digital camera, a digital video camera, and an IC recorder. USB is an abbreviation for Universal Serial Bus, and SCSI is an abbreviation for Small Computer System Interface.

The communication unit 926 is a communication device used to be connected to a network 932, and examples thereof include a communication card for a wired or wireless LAN, Bluetooth (registered trademark), or WUSB, an optical communication router, an ADSL router, and a device for contact or contactless communication. In addition, the network 932 connected to the communication unit 926 is configured from a wire-connected or wirelessly connected network, and examples thereof include the Internet, a home-use LAN, infrared communication, visible light communication, broadcasting, and satellite communication. LAN is an abbreviation for Local Area Network, WUSB is an abbreviation for Wireless USB, and ADSL is an abbreviation for Asymmetric Digital Subscriber Line.

The exemplary hardware configuration of the information processing device 100 has been illustrated. Each of the above components may be implemented using general-purpose members, but may also be implemented in hardware specialized in the function of each component. Such a configuration may be modified as appropriate according to the technological level at the time of the implementation.

### <3. Conclusion>

According to an embodiment of the present disclosure described above, there is provided the information processing device 100 capable of selecting content to be recommended to the user, estimating user's behavior, and outputting recommendation content in an appropriate form depending on user's situations.

The information processing device 100 according to an embodiment of the present disclosure determines content to be recommended to the user based on information relating to user's preference or a content consumption history. Furthermore, the information processing device 100 according to an embodiment of the present disclosure estimates the user's behavior based on information including an operation history and sensed data, and adjusts the amount of content to be provided for the user based on the estimated result.

In other words, the information processing device 100 according to an embodiment of the present disclosure provides the user with an appropriate amount of recommendation content depending on user's situations rather than simply recommends and provides content for the user.

The information processing device 100 according to an embodiment of the present disclosure estimates the user's behavior and adjusts the amount of content to be provided for the user based on the estimated result, and thus, it is possible to provide the user with content to be recommended to the user in the most appropriate form. The information processing device 100 adjusts the amount of content to be provided for the user and outputs the content by voice. Thus, it is possible to allow the user to digest efficiently content to be recommended to the user, in one example, even a case where the user has little time to view the content with the eyes.

Steps in a process executed by each device in this specification are not necessarily executed chronologically in the order described in a sequence chart or a flow chart. In one example, steps in a process executed by each device may be executed in a different order from the order described in a flow chart or may be executed in parallel.

Further, a computer program can be created which causes hardware such as a CPU, ROM, or RAM, incorporated in each of the devices, to function in a manner similar to that of structures in the above-described devices. Furthermore, it is possible to provide a recording medium having the computer program recorded thereon. Moreover, the configuration of each functional block shown in functional block diagrams in hardware makes it possible to implement the series of processes by hardware.

Moreover, software that implements a user interface or an application shown in the above-described embodiments may be implemented as a web application used through a network such as the Internet. Such a web application may be implemented with a markup language, for example, HyperText Markup Language (HTML), Standard Generalized Markup Language (SGML), Extensible Markup Language (XML), or the like.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) An information processing device including:
   a controller configured to determine a time slot suitable for outputting content by estimating behavior of a user and to extract an amount of content capable of outputting during the time slot based on information relating to preference of the user.
(2) The information processing device according to (1),
   wherein the controller determines the time slot by referring to a behavior pattern of the user.
(3) The information processing device according to (1) or (2),
   wherein the controller estimates behavior of the user using sensing data obtained from a sensor worn on the user.
(4) The information processing device according to any of (1) to (3),
   wherein the controller determines content to be extracted based on information on the time slot.
(5) The information processing device according to any of (1) to (4),
   wherein the controller extracts content using a consumption history of the extracted content.
(6) The information processing device according to any of (1) to (5),
   wherein the controller determines a genre of content to be extracted based on the estimated behavior of the user.
(7) The information processing device according to any of (1) to (6),
   wherein the controller changes a genre of content to be extracted when the estimated behavior of the user varies from a normal state.
(8) The information processing device according to any of (1) to (7),
   wherein the controller determines a device used to output the extracted content among a plurality of devices and outputs the content to the determined device.
(9) The information processing device according to (8),
   wherein the controller performs switching of the device used to output the extracted content based on the estimated behavior of the user.
(10) The information processing device according to (8) or (9),
   wherein the controller performs switching of the device for output based on a state of each of the devices.
(11) The information processing device according to any of (8) to (10),
   wherein the controller converts the extracted content into voice information for outputting to the determined device.
(12) The information processing device according to (11),
   wherein the controller changes a speed of voice output of content through the determined device and adjusts an amount of content to be extracted based on the speed of voice output.
(13) The information processing device according to any of (1) to (12),
   wherein the controller extracts the content based on a schedule of behavior of the user.
(14) An information processing method including:
   determining a time slot suitable for outputting content by estimating behavior of a user; and
   extracting an amount of content capable of outputting during the time slot based on information relating to preference of the user.
(15) A computer program for causing a computer to execute:
   determining a time slot suitable for outputting content by estimating behavior of a user; and
   extracting an amount of content capable of outputting during the time slot based on information relating to preference of the user.

### Reference Signs List

- 1: information processing system
- 2: network
- 10: content server group
- 100: information processing device
- 110: content recommendation unit
- 120: behavior estimation unit
- 130: content output unit
- 132: content filter
- 136: screen-reading processing unit

## Claims

1. An information processing device comprising:
a controller configured to determine a time slot suitable for outputting content by estimating behavior of a user and to extract an amount of content capable of outputting during the time slot based on information relating to preference of the user.

2. The information processing device according to claim 1,
wherein the controller determines the time slot by referring to a behavior pattern of the user.

3. The information processing device according to claim 1,
wherein the controller estimates behavior of the user using sensing data obtained from a sensor worn on the user.

4. The information processing device according to claim 1,
wherein the controller determines content to be extracted based on information on the time slot.

5. The information processing device according to claim 1,
wherein the controller extracts content using a consumption history of the extracted content.

6. The information processing device according to claim 1,
wherein the controller determines a genre of content to be extracted based on the estimated behavior of the user.

7. The information processing device according to claim 1,
wherein the controller changes a genre of content to be extracted when the estimated behavior of the user varies from a normal state.

8. The information processing device according to claim 1,
wherein the controller determines a device used to output the extracted content among a plurality of devices and outputs the content to the determined device.

9. The information processing device according to claim 8,
wherein the controller performs switching of the device used to output the extracted content based on the estimated behavior of the user.

10. The information processing device according to claim 8,
wherein the controller performs switching of the device for output based on a state of each of the devices.

11. The information processing device according to claim 8,
wherein the controller converts the extracted content into voice information for outputting to the determined device.

12. The information processing device according to claim 11,
wherein the controller changes a speed of voice output of content through the determined device and adjusts an amount of content to be extracted based on the speed of voice output.

13. The information processing device according to claim 1,
wherein the controller extracts the content based on a schedule of behavior of the user.

14. An information processing method comprising:
determining a time slot suitable for outputting content by estimating behavior of a user; and
extracting an amount of content capable of outputting during the time slot based on information relating to preference of the user.

15. A computer program for causing a computer to execute:
determining a time slot suitable for outputting content by estimating behavior of a user; and
extracting an amount of content capable of outputting during the time slot based on information relating to preference of the user.
